# EUROPEAN PATENT APPLICATION

(11) **EP 4 845 242 A1**
(43) Date of publication of application: **25.11.2026**
(21) Application number: 25747645.7
(22) Date of filing: 21.01.2025
(51) Int. Cl.: H04W 52/02

(54) **COMMUNICATION METHOD, AND APPARATUS**

(30) Priority: 02.02.2024 CN 202410149852
(71) Applicant: Huawei Technologies Co., Ltd., Shenzhen, Guangdong 518129 (CN)
(72) Inventor: ZHANG, Yangyang, Shenzhen, Guangdong 518129 (CN); MA, Siqi, Shenzhen, Guangdong 518129 (CN); XIE, Xi, Shenzhen, Guangdong 518129 (CN); LIU, Xiaoqing, Shenzhen, Guangdong 518129 (CN); YU, Zheng, Shenzhen, Guangdong 518129 (CN)
(74) Representative: Huawei European IPR
(86) International application number: PCT/CN2025/073685
(87) International publication number: WO 2025/162073

(57) **Abstract**

A communication method and apparatus are provided, to improve wake-up accuracy of a receiver. The communication method may include the following steps: A first communication apparatus monitors first wake-up information and second wake-up information, where the first wake-up information indicates whether to wake up a terminal in a first terminal group, the first terminal group includes a first terminal, the second wake-up information indicates whether to wake up a terminal in a second terminal group, and the second terminal group includes the first terminal; and the first communication apparatus determines, based on the first wake-up information and the second wake-up information, whether to wake up the first terminal.

## Description

### CROSS-REFERENCE TO RELATED APPLICATIONS

This application claims priority to Chinese Patent Application No. 202410149852.0, filed with the China National Intellectual Property Administration on February 2, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With the development of technologies, the 5th generation mobile communication technology (5th generation mobile communication technology, 5G) is gradually popularized. 5G networks (or referred to as new radio (new radio, NR)) support larger transmission bandwidths, more transceiver antenna arrays, higher transmission rates, and more flexible scheduling mechanisms at smaller granularities. However, this greatly increases power consumption burdens of terminal devices.

To reduce power consumption of UE, the 3rd generation partnership project (3rd generation partnership project, 3GPP) introduces a research topic for reducing power consumption in the NR release-18 (release-18, Rel-18) standard version. A method proposed currently is to apply a secondary functional module with low power consumption to a 5G network. Specifically, during monitoring (monitor) for a low-power wake-up signal (low-power wake-up signal, LP-WUS), only the secondary functional module is enabled, and a main functional module is in a deep sleep state or a power-off state. The corresponding main functional module is woken up or enabled after the secondary functional module receives the LP-WUS.

Currently, there is a false alarm or missed detection on the secondary functional module, and wake-up accuracy is to be improved.

### SUMMARY

This application provides a communication method and apparatus, to improve wake-up accuracy of a receiver.

According to a first aspect, a communication method is provided. The method may be implemented by a first communication apparatus. The first communication apparatus may be a terminal device (for example, a first terminal). Alternatively, the first communication apparatus may be a component in a terminal device. The component in this application may include, for example, at least one of a chip, a chip system, a processor, a transceiver, a processing unit, or a transceiver unit. It may be understood that the method is applied to a terminal device side. For example, an execution body is the first communication apparatus. The communication method provided in this application may include the following steps: The first communication apparatus monitors first wake-up information and second wake-up information, where the first wake-up information indicates whether to wake up a terminal in a first terminal group, the first terminal group includes a first terminal, the second wake-up information indicates whether to wake up a terminal in a second terminal group, and the second terminal group includes the first terminal; and the first communication apparatus determines, based on the first wake-up information and the second wake-up information, whether to wake up the first terminal.

Based on the first aspect, whether to wake up the first terminal may be determined based on the first wake-up information and the second wake-up information, and the first terminal belongs to the first terminal group and the second terminal group. Therefore, the terminal device may determine a wake-up status of the first terminal based on wake-up information (including the first wake-up information and the second wake-up information) corresponding to at least two terminal groups, so that the wake-up status can be determined more accurately, and a false alarm or missed detection can be avoided.

In this application, the wake-up status may include a wake-up state or a non-wake-up state.

In a possible implementation, determining, based on the first wake-up information and the second wake-up information, whether to wake up the first terminal includes: if at least one of the following conditions is satisfied, determining to wake up the first terminal: the first wake-up information indicates to wake up the first terminal group, and the second wake-up information indicates not to wake up the second terminal group; the first wake-up information indicates not to wake up the first terminal group, and the second wake-up information indicates to wake up the second terminal group; and the first wake-up information indicates to wake up the first terminal group, and the second wake-up information indicates to wake up the second terminal group; or if at least one of the following conditions is satisfied, determining not to wake up the first terminal: the first wake-up information indicates to wake up the first terminal group, and the second wake-up information indicates not to wake up the second terminal group; the first wake-up information indicates not to wake up the first terminal group, and the second wake-up information indicates to wake up the second terminal group; and the first wake-up information indicates not to wake up the first terminal group, and the second wake-up information indicates not to wake up the second terminal group.

Based on the foregoing implementation, when at least one of the first wake-up information and the second wake-up information indicates to perform wake-up, the first terminal may be determined to be woken up. Alternatively, when at least one of the first wake-up information and the second wake-up information indicates not to perform wake-up, the first terminal may be determined not to be woken up.

In a possible implementation, the first wake-up information and the second wake-up information are carried in a same low-power wake-up signal, the low-power wake-up signal carries N bits, the first wake-up information and the second wake-up information each are one of the N bits, any one of the N bits corresponds to one of N terminal groups, the N terminal groups include the first terminal group and the second terminal group, and N is a positive integer greater than 1; or the first wake-up information is carried in a first low-power wake-up signal, the second wake-up information is carried in a second low-power wake-up signal, the first low-power wake-up signal carries N bits, the first wake-up information is one of the N bits, any one of the N bits corresponds to one of N terminal groups, the N terminal groups include the first terminal group, the second low-power wake-up signal carries M bits, the second wake-up information is one of the M bits, any one of the M bits corresponds to one of M terminal groups, and the M terminal groups include the second terminal group; or the first wake-up information is carried in a first low-power wake-up signal, the second wake-up information is carried in a second low-power wake-up signal, the first wake-up information includes an identifier of the first terminal group, and the second wake-up information includes an identifier of the second terminal group.

Based on the foregoing implementation, the first wake-up information and the second wake-up information may be carried in one low-power wake-up signal, or may be carried in a plurality of different low-power wake-up signals, so that wake-up information can be flexibly sent, and the wake-up status of the first terminal can be flexibly indicated.

In a possible implementation, the first communication apparatus may further receive first information, where the first information indicates the identifier of the first terminal group and/or the identifier of the second terminal group.

Based on the foregoing implementation, an identifier of a terminal group to which the first terminal belongs may be configured and indicated by a network device.

In a possible implementation, the first communication apparatus may further determine the identifier of the first terminal group and/or the identifier of the second terminal group based on a number of terminal groups to which the first terminal belongs, where the terminal groups to which the first terminal belongs include the first terminal group and the second terminal group.

Based on the foregoing implementation, the first communication apparatus (for example, the first terminal) may correctly and flexibly determine, based on the number of terminal groups to which the first terminal belongs, an identifier of a terminal group to which the first terminal belongs.

In a possible implementation, the first communication apparatus may further receive second information, where the second information indicates the identifier of the first terminal group; and the first communication apparatus may further determine the identifier of the second terminal group based on a number of terminal groups to which the first terminal belongs and/or the identifier of the first terminal group, where the terminal groups to which the first terminal belongs include the first terminal group and the second terminal group.

Based on the foregoing implementation, a network device may configure and indicate an identifier of a terminal group to which the first terminal belongs, and the first terminal determines, based on the identifier of the terminal group, an identifier of another terminal group to which the first terminal belongs, thereby implementing flexible configuration of the identifier of the terminal group.

In a possible implementation, the first communication apparatus may further receive third information, where the third information indicates the number of terminal groups to which the first terminal belongs.

In a possible implementation, the third information is carried in a low-power wake-up signal or a low-power synchronization signal.

Based on the foregoing implementation, the third information can be flexibly sent, thereby improving indication efficiency.

In a possible implementation, the first communication apparatus may further send fourth information, where the fourth information indicates a maximum number, supported by the first terminal, of terminal groups to which the first terminal belongs, or the fourth information indicates a number, expected by the first terminal, of terminal groups to which the first terminal belongs.

Based on the foregoing implementation, the first communication apparatus may report the fourth information, to indicate a number of repeated groups supported by the first terminal, or to indicate an expected number of repeated groups, so that a network can determine, based on a capability or an expectation of the first terminal, whether to perform repeated grouping, that is, determine whether to perform the method shown in this application. In this application, repeated grouping means that a same terminal is included in a plurality of terminal groups. Correspondingly, the terminal that is repeatedly grouped monitors wake-up information corresponding to the plurality of terminal groups, and determines, based on the wake-up information corresponding to the plurality of terminal groups, whether to perform wake-up.

In a possible implementation, the first communication apparatus may further send fifth information, where the fifth information indicates that the first terminal supports monitoring for a plurality of pieces of wake-up information.

Based on the foregoing implementation, the first communication apparatus may report the fifth information, to indicate whether the first terminal supports monitoring for a plurality of pieces of wake-up information, in other words, to indicate whether the first terminal supports repeated grouping, so that the network can determine, based on whether the first terminal supports monitoring for a plurality of pieces of wake-up information, whether to perform repeated grouping, that is, determine whether to perform the method shown in this application.

In a possible implementation, the first communication apparatus may further receive sixth information, where the sixth information is used to determine that the first terminal is to monitor a plurality of pieces of wake-up information.

Based on the foregoing implementation, the first communication apparatus may receive the sixth information, and determine, based on the sixth information, to monitor a plurality of pieces of wake-up information, that is, determine, based on the sixth information, to perform the method shown in this application.

According to a second aspect, a communication method is provided. The method may be implemented by a second communication apparatus. The second communication apparatus may be a network device (for example, a base station). Alternatively, the second communication apparatus may be a component in a network device. The component in this application may include, for example, at least one of a chip, a chip system, a processor, a transceiver, a processing unit, or a transceiver unit. It may be understood that the method is applied to a network device side. For example, an execution body is the second communication apparatus. The communication method provided in this application may include the following step: The second communication apparatus sends first wake-up information and second wake-up information, where the first wake-up information indicates whether to wake up a terminal in a first terminal group, the first terminal group includes a first terminal, the second wake-up information indicates whether to wake up a terminal in a second terminal group, and the second terminal group includes the first terminal.

In a possible implementation, the first wake-up information and the second wake-up information are carried in a same low-power wake-up signal, the low-power wake-up signal carries N bits, the first wake-up information and the second wake-up information each are one of the N bits, any one of the N bits corresponds to one of N terminal groups, the N terminal groups include the first terminal group and the second terminal group, and N is a positive integer greater than 1; or the first wake-up information is carried in a first low-power wake-up signal, the second wake-up information is carried in a second low-power wake-up signal, the first low-power wake-up signal carries N bits, the first wake-up information is one of the N bits, any one of the N bits corresponds to one of N terminal groups, the N terminal groups include the first terminal group, the second low-power wake-up signal carries M bits, the second wake-up information is one of the M bits, any one of the M bits corresponds to one of M terminal groups, and the M terminal groups include the second terminal group; or the first wake-up information is carried in a first low-power wake-up signal, the second wake-up information is carried in a second low-power wake-up signal, the first wake-up information includes an identifier of the first terminal group, and the second wake-up information includes an identifier of the second terminal group.

In a possible implementation, the second communication apparatus may further send first information, where the first information indicates the identifier of the first terminal group and/or the identifier of the second terminal group.

In a possible implementation, the second communication apparatus may further receive the identifier of the first terminal group; and configure the identifier of the second terminal group based on the identifier of the first terminal group.

In a possible implementation, the second communication apparatus may further send third information, where the third information indicates a number of terminal groups to which the first terminal belongs, the number of terminal groups to which the first terminal belongs and the identifier of the first terminal group are used to determine the identifier of the second terminal group, and the terminal groups to which the first terminal belongs include the first terminal group and the second terminal group.

In a possible implementation, the second communication apparatus may further receive fourth information, where the fourth information indicates a maximum number, supported by the first terminal, of terminal groups to which the first terminal belongs, or the fourth information indicates a number, expected by the first terminal, of terminal groups to which the first terminal belongs.

In a possible implementation, the second communication apparatus may further receive fifth information, where the fifth information indicates that the first terminal supports monitoring for a plurality of pieces of wake-up information.

In a possible implementation, the second communication apparatus may further send sixth information, where the sixth information is used to determine that the first terminal is to monitor a plurality of pieces of wake-up information.

For technical effects brought by the second aspect and the possible implementations, refer to descriptions of beneficial effects of corresponding solutions in the first aspect. Details are not described herein again.

According to a third aspect, a communication apparatus is provided, and is configured to perform the method according to any one of the first aspect and the second aspect and the possible implementations of the first aspect and the second aspect. It may be understood that the apparatus has a function of the foregoing first communication apparatus or second communication apparatus. The apparatus may be a terminal device (for example, a first terminal) or a component in a terminal device, or may be a network device (for example, a base station) or a component in a network device. The component in this application may include, for example, at least one of a chip, a chip system, a processor, a transceiver, a processing unit, or a transceiver unit.

In an optional implementation, the apparatus may include modules that are in one-to-one correspondence with the methods/operations/steps/actions according to any one of the first aspect and the second aspect and the possible implementations of the first aspect and the second aspect. The module may be a hardware circuit or software, or may be implemented by a hardware circuit in combination with software. In an optional implementation, the apparatus includes a processing unit (also referred to as a processing module sometimes) and a communication unit (also referred to as a transceiver module, a communication module, and the like sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

For example, when the apparatus is configured to perform the method described in either of the first aspect and the second aspect, the apparatus may include the communication unit and the processing unit.

According to a fourth aspect, an embodiment of this application further provides a communication apparatus, including a processor. The processor is configured to perform the method according to any one of the first aspect and the second aspect and the possible implementations of the first aspect and the second aspect. The apparatus may be a terminal device (for example, a first terminal) or a component in a terminal device, or may be a network device (for example, a base station) or a component in a network device. The component in this application may include, for example, at least one of a chip, a chip system, a processor, a transceiver, a processing unit, or a transceiver unit.

In a possible implementation, the processor is coupled to a memory, and is configured to execute a computer program (or computer-executable instructions) stored in the memory. When the computer program (or the computer-executable instructions) is executed, the apparatus is caused to perform the method according to any one of the first aspect and the second aspect and the possible implementations of the first aspect and the second aspect.

In a possible implementation, the processor is implemented by using a circuit, or includes a circuit. The circuit may be a logic circuit and/or an analog circuit. The receiving and sending functions in the method according to any one of the first aspect and the second aspect and the possible implementations of the first aspect and the second aspect may be understood as follows: The circuit transmits a message to an input/output interface, or receives a message from another communication apparatus through an input/output interface.

In a possible implementation, the processor and the memory are integrated together. In another possible implementation, the memory is located outside the apparatus.

The apparatus may further include a communication interface. The communication interface is for communication between the apparatus and another device, for example, for data and/or signal sending or receiving. For example, the communication interface may be a transceiver, a circuit, a bus, a module, or another type of communication interface, for example, an input/output interface. The input/output interface may be configured to input/output a message. The input/output interface may be a same interface, that is, the same interface can implement both a sending function and a receiving function. Alternatively, the input/output interface includes an input interface and an output interface. The input interface is configured to implement a receiving function, that is, configured to receive a message; and the output interface is configured to implement a sending function, that is, configured to send a message.

According to a fifth aspect, a computer-readable storage medium is provided. The computer-readable storage medium is configured to store a computer program or instructions. When the computer program or the instructions are run, the method according to any one of the first aspect and the second aspect and the possible implementations of the first aspect and the second aspect is implemented.

According to a sixth aspect, a computer program product including instructions is provided. When the computer program product runs on a computer, the method according to any one of the first aspect and the second aspect and the possible implementations of the first aspect and the second aspect is implemented.

According to a seventh aspect, a communication method is provided. The communication method may include the method implemented by the first communication apparatus according to any one of the first aspect and the possible implementations of the first aspect, or the method implemented by the second communication apparatus according to any one of the second aspect and the possible implementations of the second aspect.

According to an eighth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the eighth aspect, refer to the descriptions of the beneficial effects of the corresponding solutions in the first aspect and the second aspect. Details are not described herein again.

### BRIEF DESCRIPTION OF DRAWINGS

FIG. 1 is a diagram of an architecture of a wireless communication system;
FIG. 2 is a diagram of indicating, by using a PEI, whether to wake up a paging subgroup;
FIG. 3 is a schematic flowchart of a communication method according to an embodiment of this application;
FIG. 4 is a diagram of a relationship between first wake-up information and second wake-up information according to an embodiment of this application;
FIG. 5 is a diagram of another relationship between first wake-up information and second wake-up information according to an embodiment of this application;
FIG. 6 is a diagram of another relationship between first wake-up information and second wake-up information according to an embodiment of this application;
FIG. 7 is a schematic flowchart of reporting fourth information by a terminal according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

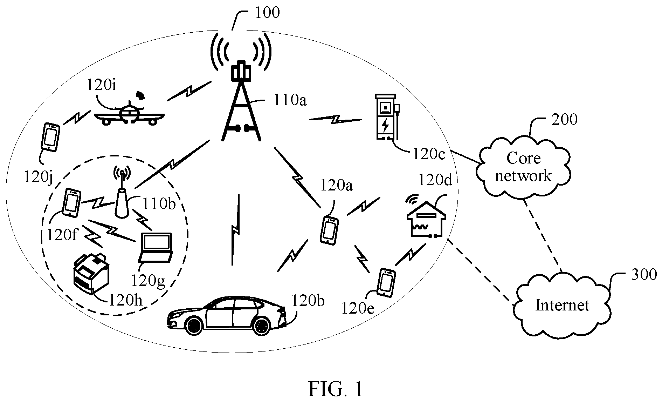

FIG. 1 is a diagram of an architecture of a communication system to which an embodiment of this application is applied. As shown in FIG. 1, the communication system includes a radio access network 100 and a core network 200. Optionally, the communication system may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely an example diagram. The communication system may further include other network devices, for example, may further include a wireless relay device and a wireless backhaul device, which are not shown in FIG. 1.

The radio access network device is an access device for the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, an access node in a long range radio (long range radio, LoRa) system, or an access node in an internet of vehicles system, or the like. Alternatively, the radio access network device may be a module or unit that completes some functions of the base station, for example, may be a central unit (central unit, CU), or may be a distributed unit (distributed unit, DU), or may be a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. The RU may be included in a radio frequency device or a radio frequency unit. For specific descriptions of the foregoing protocol layers, refer to related technical specifications of the 3rd generation partnership project (3rd generation partnership project, 3GPP). The radio access network device may be a macro base station (such as 110a in FIG. 1), or may be a micro base station or an indoor base station (such as 110b in FIG. 1), or may be a relay node or a donor node. Neither of a specific technology and a specific device form used for the radio access network device is limited in embodiments of this application. For ease of description below, a network device is used as an abbreviation of the radio access network device, and a base station is used as an example of the radio access network device.

The terminal is a device having wireless sending and receiving functions, and may send a signal to a base station, or receive a signal from a base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal may be a mobile phone, a tablet computer, a computer with wireless sending and receiving functions, a wearable device, a vehicle, an airplane, a ship, a robot, a robot arm, a smart home device, or the like. Neither of a specific technology and a specific device form used for the terminal is limited in embodiments of this application.

The base station and the terminal may be fixed or movable. The base station and the terminal may be deployed on land, including an indoor or outdoor device, a handheld device, or a vehicle-mounted device; or may be deployed on a water surface; or may be deployed on a plane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of a base station, and 120a to 120j in FIG. 1 may be referred to as communication apparatuses having a function of a terminal.

Communication may be performed between a base station and a terminal, between base stations, or between terminals by using a licensed spectrum, an unlicensed spectrum, or both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as smart grid, industrial control, smart transportation, and smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

Technical terms that may be involved in this application are described below.

### (1) Main functional module and secondary functional module

To reduce power consumption of a terminal, the terminal may use a working mode in which the main functional module and the secondary functional module work. The main functional module and the secondary functional module may be different links included in a same module. Alternatively, the main functional module and the secondary functional module may be links included in different modules. The main functional module and the secondary functional module may be communicatively connected to each other.

The following describes functions of the main functional module and the secondary functional module in the terminal.

The main functional module is configured to implement various operations and functions (for example, operations and functions such as radio resource management and measurement and paging message transmission) of the terminal, and may also be referred to as a main circuit module, a main link, a main circuit, a main receiver, or the like. The main functional module is, for example, a main radio (main radio) circuit in the terminal. The main functional module is used by the terminal to receive downlink signaling and data in common NR. Power consumption of the main functional module in a normal working state is high, and is usually at a level of several milliwatts (mW). After the terminal enters a radio resource control (radio resource control, RRC) idle (idle) state or an RRC inactive (inactive) state, the main functional module enters a disabled state (for example, a power saving mode or an extremely low-power state). In this case, the main functional module does not perform operations such as radio resource management and measurement, paging message transmission, cell reselection, and cell handover, thereby effectively reducing power consumption caused by performing the foregoing operations by the terminal.

The RRC idle state is a state of the terminal in which the terminal completes camping on a cell but does not perform a random access process. In this case, the cell on which the terminal camps is a camped-on cell. The terminal usually enters the RRC idle state after being powered on or after an RRC release.

Using reception of a paging (paging) message as an example, in the RRC idle state or the RRC inactive state, the terminal obtains a paging frame (paging frame, PF) and a position of a paging occasion (paging occasion, PO) in the PF through calculation based on a terminal identifier (UE ID) of the terminal, and receives the paging message on the PO in the paging frame. Regardless of whether the terminal is in an RRC connected state, the RRC idle state, or the RRC inactive state, a same receiving module, that is, the main functional module, may be configured to perform the foregoing procedure of receiving the paging message.

The secondary functional module may be configured to receive a low-power signal from a base station. The low-power signal may also be referred to as a WUS or an LP-WUS, or may be referred to as a WUR signal. The secondary functional module may also be referred to as a wake-up link, a secondary link, a secondary circuit, a secondary receiver, or a low-power receiver. The secondary functional module is, for example, a wake-up receiver (wake-up receiver, WUR) circuit in the terminal. Compared with the main functional module, the secondary functional module has much lower power consumption.

The secondary functional module may be, for example, some radio frequency circuits and baseband circuits that have lower power consumption. For example, the secondary functional module may not include a ring oscillator of a phase-locked loop, and may use a low noise amplifier with a high noise factor or the like.

In another design, the secondary functional module may be a submodule (that is, a partial module) of the main functional module, or reuse some circuits, components, or the like with the main functional module. Compared with the main functional module, the secondary functional module includes fewer components during working. For example, the secondary functional module does not include a fast Fourier transform module, a complex channel decoding module, a low-density parity-check code (low-density parity-check code, LDPC) decoding module, a polar decoding module, or the like, and may have fewer registers and memory units and use a bus with a lower bandwidth. Therefore, power consumption of the secondary functional module is lower than power consumption of the main functional module.

In another design, the main functional module may be a secondary functional module in a low-power working mode. For example, the main functional module is a secondary functional module when a working voltage is reduced, a clock frequency is decreased, or a sampling rate and a bit width of analog-to-digital sampling are reduced. Specific implementations of the main functional module and the secondary functional module are not limited in embodiments of this application.

The following uses an example in which the low-power signal is an LP-WUS for description.

Power consumption of the secondary functional module in a working state is low, is usually much lower than power consumption of the main functional module in a working state, and is usually at a level of microwatts (µW), a level of hundred microwatts, or even a level of nanowatts (nW). For example, the power consumption of the secondary functional module is less than 1 milliwatt. Based on the foregoing working modes of the main functional module and the secondary functional module, when entering the RRC idle state or the RRC inactive state, the terminal may set the main functional module to enter a disabled state, an ultra low-power state, an ultra deep sleep (ultra deep sleep) state, or another unconventional working state, monitor an LP-WUS from a base station via the secondary functional module, and wake up the main functional module through a connection to the main functional module after the WUS is detected. In this way, the main functional module enters a working state, that is, the main functional module is triggered to enter the working state from the disabled state (or exit the disabled state), to restore a function of the main functional module. Optionally, the WUS may be a signal in a modulation manner like orthogonal frequency division multiplexing (orthogonal frequency division multiplexing, OFDM), on-off keying (on-off keying, OOK), amplitude-shift keying (amplitude-shift keying, ASK), or frequency-shift keying (frequency-shift keying, FSK). Optionally, after the secondary functional module wakes up the main functional module, the secondary functional module may switch from the working state to a disabled state, or the secondary functional module is always in the working state. This is not limited in embodiments of this application.

For example, a working procedure of an LP-WUR is as follows: First, the terminal enables the LP-WUR by default, and the main functional module remains in a disabled state. The LP-WUR is configured to monitor a low-power wake-up signal LP-WUS. The LP-WUS is used to trigger wake-up of the main functional module. The main functional module is used for data transmission and reception, and may be disabled or set to a deep sleep state unless the main functional module is enabled. Power consumption of monitoring the LP-WUS depends on an LP-WUS design and a hardware module of the wake-up receiver for signal detection and processing.

In this application, the LP-WUR may be used in a power-sensitive device and/or a small device, including a terminal in an internet of things usage scenario (for example, an industrial sensor or a controller) and a terminal in the form of a wearable device or the like. In addition, application of the LP-WUR to other terminals such as XR, smart glasses, and smartphones is not excluded.

To further reduce power consumption of the terminal in the RRC idle state, the terminal is woken up by using a paging early indicator (paging early indicator, PEI). In this application, waking up the terminal is waking up the main functional module of the terminal. A principle of the PEI is as follows: Before receiving a paging message, the terminal first attempts to receive the PEI. In other words, the PEI is an indicator that is transmitted before the paging message. The PEI may indicate whether the terminal needs to receive the paging message on a next paging occasion. The PEI may be carried in an LP-WUS.

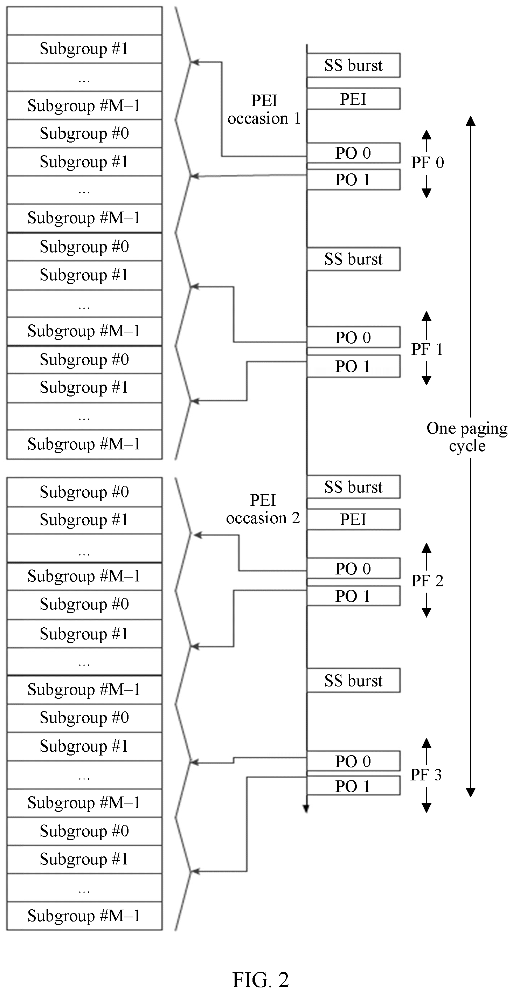

The PEI uses a grouping manner, so that a monitoring probability on a paging occasion is reduced, thereby further saving energy. In an example, when a maximum number of paging subgroups (subgroup) is 8, the PEI may include a bitmap (bitmap), and whether to wake up the eight paging subgroups may be indicated by using the bitmap, where any paging subgroup includes one or more terminals. For example, for a paging occasion, the eight paging subgroups may correspond to eight bits. Any bit corresponds to one paging subgroup. A bit value of any bit being 0 indicates not to wake up a paging subgroup corresponding to the bit on the paging occasion, and a bit value of any bit being 1 indicates not to wake up a paging subgroup corresponding to the bit on the paging occasion. Alternatively, a bit value of any bit being 1 indicates not to wake up a paging subgroup corresponding to the bit on the paging occasion, and a bit value of any bit being 0 indicates not to wake up a paging subgroup corresponding to the bit on the paging occasion. As shown in FIG. 2, paging occasions of UE #1, UE #2, UE #3, and UE #4 are all a PO 0. The UE #1 and the UE #2 belong to a subgroup #0, and the UE #3 and the UE #4 belong to a subgroup #1. The PEI indicates wake-up statuses of all paging subgroups on any paging occasion by using the bitmap, and any bit indicates a wake-up status of one subgroup.

The PO 0 is used as an example. If a bit value corresponding to the subgroup #0 is 1, it indicates that all terminals belonging to the subgroup #0 are to be woken up, that is, the UE #0 and the UE #1 are to be woken up at a position of the PO 0, and monitor a paging message on the PO 0. If a bit value corresponding to the subgroup #1 is 0, it indicates that none of terminals belonging to the subgroup #1 is to be woken up, that is, neither of the UE #3 and the UE #4 needs to be woken up at the position of the PO 0.

In addition, the PEI may correspond to a plurality of paging occasions and/or paging frames. As shown in FIG. 2, the PEI corresponds to a paging frame PF 0 and a paging frame PF 1, and the paging frame PF 0 and the paging frame PF 1 each include two paging occasions (that is, the PO 0 and a PO 1). When a maximum number of paging subgroups is 8, the PEI may include a maximum of 32 bits. Any PO corresponds to M bits in the PEI, any bit corresponds to one paging subgroup, and M is a positive integer, and is a number of paging subgroups corresponding to the bits.

For example, when M=8, the eight bits successively correspond to paging subgroups subgroup #0 to subgroup #7. For the terminal, the terminal only needs to monitor a bit corresponding to a paging subgroup to which the terminal belongs, determine, based on the bit, whether to wake up the main functional module, and receive a paging message through the main functional module.

It may be understood that the number of paging subgroups may be preconfigured or predefined. In this application, preconfiguration may be configuration performed by a network device by using signaling. Related signaling may be, for example, an RRC message, MAC control information (control element, CE), downlink control information (downlink control information, DCI), or a broadcast message (for example, a system information block (system information block, SIB)). This is not specifically limited. Predefinition may mean that related information is defined by using a local configuration or a protocol of a communication apparatus.

Currently, there is a false alarm or missed detection in a wake-up mechanism for the main functional module, and wake-up accuracy is to be improved. When the LP-WUR receives a bit indicating not to perform wake-up as a bit indicating to perform wake-up, the terminal may be incorrectly woken up, causing an increase in power consumption of the terminal. Alternatively, when the LP-WUR receives a bit indicating to perform wake-up as a bit indicating not to perform wake-up, missed detection of the terminal may be caused, and consequently the terminal does not receive a paging message, and needs to perform paging again on a subsequent paging occasion, causing an increase in a transmission delay.

To improve wake-up accuracy of a receiver, this application provides a communication method.

It may be understood that the following describes the method by using a terminal and a network device as execution bodies. The network device may be replaced with an access network device, a base station, or a network apparatus in the network device based on a requirement. In addition, the terminal may be replaced with UE, a terminal device, a terminal apparatus, or the like. The terminal and the network device may be alternatively replaced with a chip or a chip system. When the method is implemented by the chip or the chip system, receiving and sending steps in the method may be understood as communication between the chip or the chip system and another component in the device, for example, communication between a baseband chip and a radio frequency circuit. Processing performed by a single execution body in embodiments of this application may be alternatively performed by a plurality of execution bodies. These execution bodies may be logically and/or physically separated. For example, processing performed by the network device may be performed by at least one of a CU, a DU, and an RU.

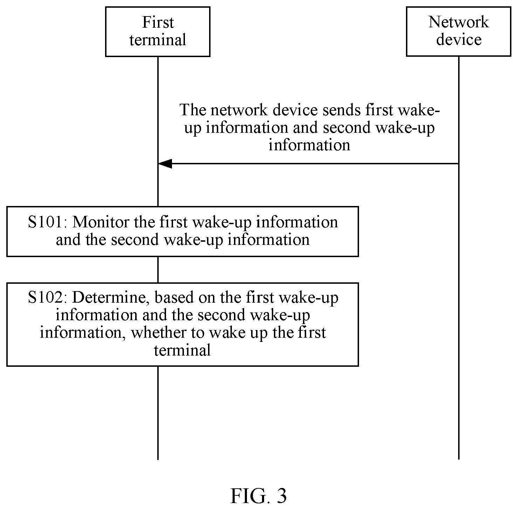

As shown in FIG. 3, a communication method provided in an embodiment of this application may include the following steps.

S101: A network device sends first wake-up information and second wake-up information. Correspondingly, a first terminal monitors the first wake-up information and the second wake-up information.

The first wake-up information indicates whether to wake up a terminal in a first terminal group, and the terminal in the first terminal group includes the first terminal. The second wake-up information indicates whether to wake up a terminal in a second terminal group, and the terminal in the second terminal group includes the first terminal. In other words, the first wake-up information and the second wake-up information each correspond to one terminal group, and both the first terminal group corresponding to the first wake-up information and the second terminal group corresponding to the second wake-up information include the first terminal.

In this application, monitoring may be understood as blind detection, detection, or reception. In S101, the first terminal may monitor the first wake-up information and the second wake-up information via a secondary functional module (for example, an LP-WUR).

The first terminal may determine the first wake-up information and the second wake-up information based on identifiers of terminal groups. In this application, the identifier of the terminal group may be a group identifier of the terminal group. For example, if the terminal group is a paging subgroup, the group identifier of the terminal group may be a subgroup identifier (subgroup ID). The group identifier of the terminal group may be an integer greater than 0. For example, when there are eight terminal groups, group identifiers of the terminal groups are respectively numbers 0 to 7.

In this application, the terminal group may be a paging subgroup, or may be a set of terminals defined in a manner other than the paging subgroup. This is not specifically limited in this application. It may be understood that the terminal group may include one or more terminals. For example, the first terminal group may be understood as one or more terminals including the first terminal, and the first wake-up information may be understood as being used to wake up the one or more terminals including the first terminal. Similarly, the second terminal group may be understood as one or more terminals including the first terminal, and the second wake-up information may be understood as being used to wake up the one or more terminals including the first terminal. This application does not exclude that both the first terminal group and the second terminal group include only the first terminal. In this case, both the first wake-up information and the second wake-up information may indicate whether to wake up the first terminal.

In a possible implementation, the first terminal group and the second terminal group may be a same terminal group, and the terminal group is a terminal group to which the first terminal belongs. In this case, the first wake-up information and the second wake-up information may be two pieces of repeatedly sent wake-up information, and indicate same content, that is, both indicate to wake up the terminal group to which the first terminal belongs, or both indicate not to wake up the terminal group to which the first terminal belongs.

For example, the network device may repeatedly send wake-up information (for example, including the first wake-up information and the second wake-up information) for the first terminal within one LP-WUS cycle, so that the first terminal determines, based on the repeatedly sent wake-up information, whether to wake up, thereby reducing a risk of a wake-up error. In addition, the network device may repeatedly send the wake-up information (for example, including the first wake-up information and the second wake-up information) for the first terminal by using different beams. Therefore, the network device may repeatedly send the wake-up information for the first terminal in a plurality of regions, antenna directions, or spatial directions by using the different beams.

In another possible implementation, the first terminal group and the second terminal group may be different terminal groups. For example, at least one terminal in the first terminal group does not belong to the second terminal group, and/or at least one terminal in the second terminal group does not belong to the first terminal group.

It may be understood that in S101, the first terminal needs to monitor the first wake-up information and the second wake-up information, and the first terminal may receive at least one of the first wake-up information and the second wake-up information through monitoring. For example, after the first wake-up information and the second wake-up information are monitored, one or more of the first wake-up information and the second wake-up information may fail to be received due to a poor channel or the like.

S102: The first terminal determines, based on the first wake-up information and the second wake-up information, whether to wake up the first terminal.

In S102, the first terminal may determine, based on the first wake-up information and the second wake-up information, whether to wake up a main functional module, for example, wake up a main receiver, so that the terminal can receive information or a message like a paging message through the main receiver.

Based on the method procedure shown in FIG. 3, whether to wake up the first terminal may be determined based on the first wake-up information and the second wake-up information, and the first terminal belongs to the first terminal group and the second terminal group. Therefore, the terminal may determine a wake-up status of the first terminal based on wake-up information corresponding to at least two terminal groups, so that the wake-up status can be determined more accurately, and a false alarm or missed detection can be avoided.

In this application, the first terminal may determine, based on a group identifier, a terminal group to which the first terminal belongs. The terminal group to which the first terminal belongs may include the first terminal group and the second terminal group. In other words, the first terminal may further be included in a terminal group other than the first terminal group and the second terminal group, but this is not limited in this application.

The following describes manners in which the first terminal determines the terminal group identifier.

In a manner of determining the group identifier, the first terminal may receive information from the network device, and the information may indicate the group identifier of the terminal group to which the first terminal belongs. In this case, the identifier of the terminal group to which the first terminal belongs may be configured by the network device. The terminal group to which the first terminal belongs may include the first terminal group and/or the second terminal group. The network device may be an access network device (for example, a base station) and/or a core network device (for example, an access and mobility management function (access and mobility management function, AMF)). This is not specifically limited.

In an example, the information indicating the group identifier of the terminal group to which the first terminal belongs may include a group identifier of the first terminal group and a group identifier of the second terminal group. Therefore, the first terminal may obtain the group identifier of the first terminal group and the group identifier of the second terminal group from the configuration. In this case, the information may be referred to as first information. In other words, the first information may include, carry, or indicate the group identifier of the first terminal group and the group identifier of the second terminal group.

The group identifier of the first terminal group and the group identifier of the second terminal group may be respectively from a core network device (for example, an AMF) and an access network device. For example, the group identifier of the first terminal group to which the first terminal belongs is allocated by the AMF, and the group identifier of the second terminal group to which the first terminal belongs is allocated by a base station.

In another example, the information indicating the group identifier of the terminal group to which the first terminal belongs may include one of the group identifier of the first terminal group and the group identifier of the second terminal group. In this case, the information may be referred to as second information. In other words, the second information may include, carry, or indicate one of the group identifier of the first terminal group and the group identifier of the second terminal group.

For example, the second information includes the group identifier of the first terminal group. The first terminal may determine the group identifier of the second terminal group based on the group identifier of the first terminal group. For example, there is an association relationship between the group identifier of the first terminal group and the group identifier of the second terminal group. For example, the association relationship is that the group identifier of the first terminal group and the group identifier of the second terminal group are consecutive integers, or the group identifier of the first terminal group and the group identifier of the second terminal group are integers separated by a particular value greater than 1.

Optionally, the information indicating the group identifier of the terminal group to which the first terminal belongs may be from a core network device or an access network device. For example, the second information may be carried in a non-access stratum (non-access stratum, NAS) message sent by an AMF to the first terminal through a base station.

In another manner of determining the group identifier, the first terminal may determine, based on a number of terminal groups to which the first terminal belongs, the identifier of the terminal group to which the first terminal belongs. In other words, the first terminal may determine the identifier of the first terminal group and/or the identifier of the second terminal group based on the number of terminal groups to which the first terminal belongs.

The number of terminal groups to which the first terminal belongs may be configured by the network device, or the number of terminal groups to which the first terminal belongs may be a predefined number, for example, 2.

If the number of terminal groups to which the first terminal belongs is configured by the network device, the terminal may receive third information, where the third information may include, carry, or indicate the number of terminal groups to which the first terminal belongs. The third information may be from a core network element or an access network device. The third information may be carried in an LP-WUS. For example, a header of the LP-WUS may carry a field, and the field may be used to carry the third information, to indicate the number of terminal groups to which the first terminal belongs. For example, the field carries a value of the number, or carries an index corresponding to the number, and the index may correspond to the number, or is used to calculate the number.

In an example, the identifier of the terminal group to which the first terminal belongs may be determined based on the number of terminal groups to which the first terminal belongs and at least one of the following: an identifier of the first terminal; a number of all paging frames within T, where T is a cycle length of using discontinuous reception (discontinuous reception, DRX) in an RRC idle state; a number of paging occasions in one paging frame; a number of terminal groups included in one paging occasion; and a total number of terminal groups. Using DRX in the RRC idle state may be referred to as iDRX for short, and refers to a length of one DRX in the RRC idle state.

For example, the terminal group is a paging subgroup. The identifier SubgroupID of the terminal group to which the first terminal belongs may satisfy: 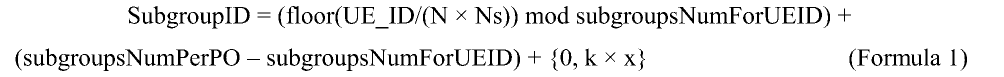 SubgroupID = (floor(UE_ID/(N × Ns)) mod subgroupsNumForUEID) + (subgroupsNumPerPO - subgroupsNumForUEID) + {0, k × x} (Formula 1)

In Formula 1, UE_ID may be determined based on the identifier of the first terminal. The identifier of the first terminal herein may be a temporary mobile subscription identifier (temporary mobile subscription identifier, TMSI) of the first terminal, for example, a 5G S-TMSI. For example, UE_ID may satisfy: UE_ID = 5G-S-TMSI mod X. If the first terminal supports extended discontinuous reception (extended discontinuous reception, eDRX), X is equal to 32768. If the first terminal does not support extended discontinuous reception, X is equal to 8192. mod represents a modulo operation.

In addition, in Formula 1, floor represents rounding down, and × represents a multiplication operation. N represents the number of all paging frames within T. Ns represents the number of paging occasions in one paging frame. subgroupsNumForUEID represents the number of paging occasions in one paging frame. subgroupsNumPerPO represents the total number of terminal groups, and the total number includes a number of terminal groups configured by a network and a number of terminal groups determined by a terminal based on a number of terminal groups to which the terminal belongs. subgroupsNumPerPO may be indicated by using a SIB. k represents a spacing between group identifiers of a plurality of terminal groups to which a same terminal belongs. For example, the spacing is a positive integer. x is the number of terminal groups to which the first terminal belongs.

Based on Formula 1, using an example in which k = 1 and x = 2, the group identifier of the first terminal group to which the first terminal belongs is expressed as: (floor(UE_ID/(N × Ns)) mod subgroupsNumForUEID) + (subgroupsNumPerPO - subgroupsNumForUEID). The group identifier of the second terminal group to which the first terminal belongs is expressed as: (floor(UE_ID/(N × Ns)) mod subgroupsNumForUEID) + (subgroupsNumPerPO - subgroupsNumForUEID) + 1. In other words, in this case, a difference between the group identifier of the first terminal group to which the first terminal belongs and the group identifier of the second terminal group to which the first terminal belongs is 1.

It may be understood that, if the terminal group to which the first terminal belongs further includes a terminal group other than the first terminal group and the second terminal group, for a manner of determining a group identifier of the another terminal group, refer to the foregoing manner of determining the group identifier of the first terminal group or the group identifier of the second terminal group. Details are not described again.

The following describes a manner in which the first wake-up information indicates whether to wake up the terminal in the first terminal group.

Using the first wake-up information as an example, the first wake-up information in this application may include a bit in a bitmap, and the bit may indicate whether to wake up the terminal in the first terminal group. The bit may be a bit corresponding to the first terminal group.

For example, the first wake-up information may include one bit. When a value of the bit is 0, it may indicate that the terminal in the first terminal group is not to be woken up, or when a value of the bit is 1, it may indicate that the terminal in the first terminal group is to be woken up. Alternatively, when a value of the bit is 1, it may indicate that the terminal in the first terminal group is not to be woken up, or when a value of the bit is 0, it may indicate that the terminal in the first terminal group is to be woken up.

In addition, the first wake-up information may include, carry, or indicate an identifier of a terminal group to be woken up or not to be woken up, or the first wake-up information may include, carry, or indicate an identifier of a terminal in a terminal group to be woken up or not to be woken up.

For example, the first wake-up information may indicate an identifier of a terminal group that needs to be woken up, and if the first wake-up information indicates the identifier of the first terminal group, it indicates that the terminal in the first terminal group is to be woken up. Alternatively, the first wake-up information may indicate an identifier of a terminal group that does not need to be woken up, and if the first wake-up information indicates the identifier of the first terminal group, it indicates that the terminal in the first terminal group is not to be woken up.

Similarly, the second wake-up information is applicable to the foregoing description for the first wake-up information, and details are not described again.

In a possible implementation of S101, the first wake-up information and the second wake-up information may be carried in a wake-up signal, and the wake-up signal is, for example, an LP-WUS. The first wake-up information and the second wake-up information may be carried in a same LP-WUS, or may be carried in different LP-WUSs. If the first wake-up information and the second wake-up information are carried in different LP-WUSs, the different LP-WUSs may belong to a same wake-up cycle. Therefore, poor transmission performance caused by an excessively long interval between the first wake-up information and the second wake-up information can be avoided, and a delay of receiving a paging message after all LP-WUSs are received can be reduced.

In a possible embodiment, when the first wake-up information and the second wake-up information may be carried in a same LP-WUS, the first wake-up information and the second wake-up information may be respectively two different bits in a same bitmap, and the bitmap is carried in the LP-WUS, in other words, the bitmap corresponds to the LP-WUS. For example, one LP-WUS may carry N bits, and the N bits may be used as one bitmap. The first wake-up information and the second wake-up information each may be one of the N bits. Any one of the N bits may correspond to one of N terminal groups (for example, including the first terminal group and the second terminal group), any bit indicates whether to wake up a terminal in a corresponding terminal group, the N terminal groups include the first terminal group and the second terminal group, and N is a positive integer greater than 1.

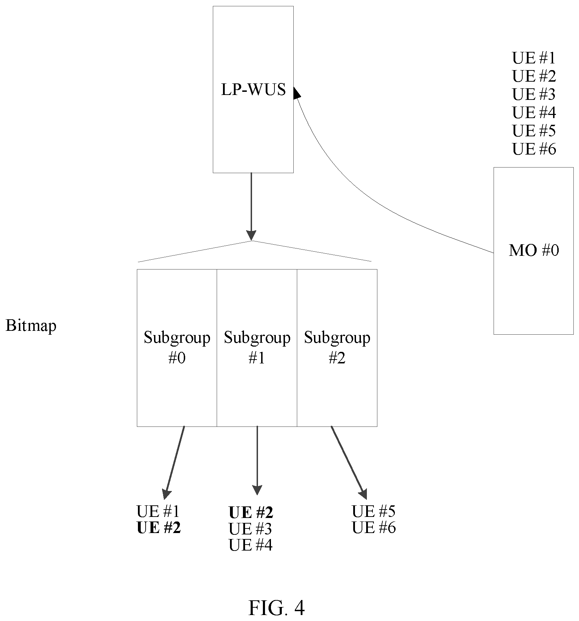

For example, as shown in FIG. 4, a paging occasion MO #0 is associated with UE #1 to UE #6. The first terminal is UE #2. It can be learned that the UE #2 belongs to two paging subgroups: a subgroup #0 and a subgroup #1. In other words, identifiers of the paging subgroups to which the UE #2 belongs are 0 and 1. The subgroup #0 and the subgroup #1 are associated with a same LP-WUS. In other words, wake-up information corresponding to the subgroup #0 and wake-up information corresponding to the subgroup #1 are carried in a same LP-WUS. In FIG. 4, the first wake-up information and the second wake-up information each are one bit in a bitmap corresponding to the LP-WUS. Specifically, the first wake-up information is a bit corresponding to the subgroup #0 in the bitmap, and the second wake-up information is a bit corresponding to the subgroup #1 in the bitmap. In other words, the first wake-up information and the second wake-up information of the UE #2 are associated with one LP-WUS, or the first wake-up information and the second wake-up information of the UE #2 are associated with a same paging occasion.

In a possible embodiment, when the first wake-up information and the second wake-up information may be carried in two different LP-WUSs, the first wake-up information and the second wake-up information may be respectively bits in two bitmaps.

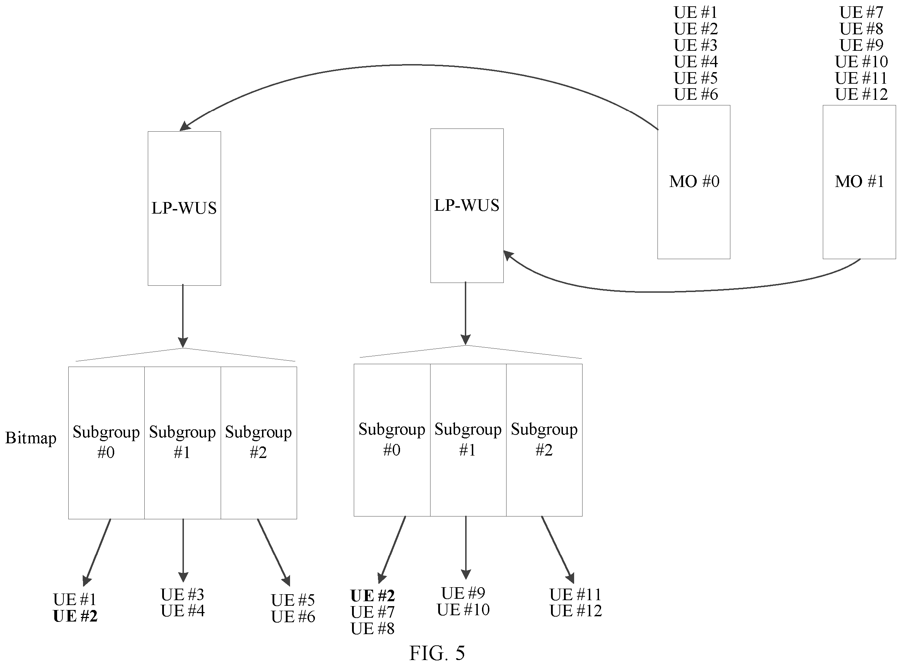

For example, as shown in FIG. 5, a paging occasion MO #0 is associated with UE #1 to UE #6, and a paging occasion MO #1 is associated with UE #2 and UE #7 to UE #12. The MO #0 and the MO #1 are respectively associated with different LP-WUSs. For example, the MO #0 and the MO #1 are respectively associated with two adjacent LP-WUSs. The first terminal is the UE #2. It can be learned that the UE #2 belongs to two paging subgroups: a subgroup #0 corresponding to the MO #0 and a subgroup #0 corresponding to the MO #1. In other words, for the MO #0 and the MO #1, identifiers of the paging subgroups to which the UE #2 belongs are 0. The first wake-up information and the second wake-up information correspond to different MOs. In FIG. 5, the first wake-up information is one bit in a bitmap corresponding to the MO#0, and the second wake-up information is one bit in a bitmap corresponding to the MO#1. Specifically, the first wake-up information is a bit corresponding to the subgroup #0 in the bitmap corresponding to the MO #0, and the second wake-up information is a bit corresponding to the subgroup #0 in the bitmap corresponding to the MO #1. For the example shown in FIG. 5, the first wake-up information and the second wake-up information of the UE #2 are associated with different LP-WUSs. In other words, the first wake-up information and the second wake-up information of the UE #2 are associated with different paging occasions.

In a possible embodiment, when the first wake-up information and the second wake-up information may be carried in two different LP-WUSs, the first wake-up information may indicate the identifier of the first terminal group. For example, the first wake-up information may carry the identifier of the first terminal group, to indicate to wake up or not to wake up the first terminal group. For another example, the first wake-up information may carry an identifier of the terminal in the first terminal group, to indicate to wake up or not to wake up the terminal in the first terminal group. In addition, the second wake-up information may indicate the identifier of the second terminal group. For example, the second wake-up information may carry the identifier of the second terminal group, to indicate to wake up or not to wake up the second terminal group. For another example, the second wake-up information may carry an identifier of the terminal in the second terminal group, to indicate to wake up or not to wake up the terminal in the second terminal group.

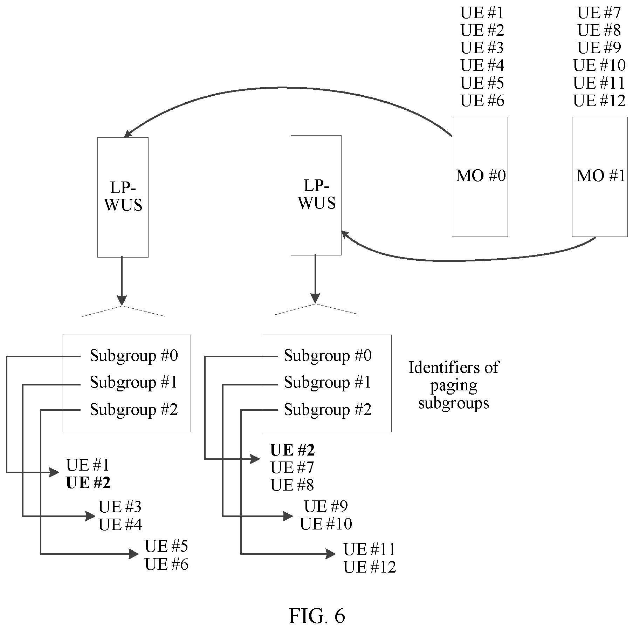

For example, as shown in FIG. 6, a paging occasion MO #0 is associated with UE #1 to UE #6, and a paging occasion MO #1 is associated with UE #2 and UE #7 to UE #12. The MO #0 and the MO #1 are respectively associated with different LP-WUSs. For example, the MO #0 and the MO #1 are respectively associated with two adjacent LP-WUSs. The first terminal is the UE #2. It can be learned that the UE #2 belongs to two paging subgroups: a subgroup #0 corresponding to the MO #0 and a subgroup #0 corresponding to the MO #1. In other words, for the MO #0 and the MO #1, identifiers of the paging subgroups to which the UE #2 belongs are 0. In FIG. 6, the first wake-up information indicates a paging subgroup that is to be woken up or not to be woken up in paging subgroups corresponding to the MO #0, and the second wake-up information indicates a paging subgroup that is to be woken up or not to be woken up in paging subgroups corresponding to the MO #1. The first wake-up information and the second wake-up information correspond to different MOs.

The following uses the first wake-up information as an example for description. The second wake-up information may be implemented by reference. When a paging subgroup indicated by the wake-up information is a paging subgroup to be woken up, if the paging subgroup that is to be woke up in the paging subgroups corresponding to the MO #0 is the subgroup #0, the first wake-up information may be an identifier of the subgroup #0. For example, when a value of the first wake-up information is "0", the first wake-up information indicates to wake up the subgroup #0. Similarly, a paging subgroup indicated by the wake-up information may be alternatively used as a paging subgroup that is not to be woken up. For example, when a value of the first wake-up information is "0", the first wake-up information indicates not to wake up the subgroup #0.

Optionally, the first terminal may determine, based on a network configuration (for example, a preconfiguration) or a predefinition, that the paging subgroup indicated by the wake-up information is a terminal group to be woken up or a terminal group not to be woken up. If the first terminal determines, based on the network configuration, that the paging subgroup indicated by the wake-up information is a terminal group to be woken up or a terminal group not to be woken up, the corresponding configuration may be carried in configuration information or a configuration message sent by the core network device or the base station to the first terminal. If the first terminal determines, based on the predefinition, that the paging subgroup indicated by the wake-up information is a terminal group to be woken up or a terminal group not to be woken up, the first terminal may determine, based on a local configuration (for example, a factory configuration) or a protocol-based definition, that the paging subgroup indicated by the wake-up information is a terminal group to be woken up or a terminal group not to be woken up.

It may be understood that wake-up information on any paging occasion may support indication of a wake-up status of one or more terminal groups. When the wake-up information on any paging occasion supports indication of wake-up statuses of a plurality of terminal groups, and the terminal in the first terminal group is not completely the same as the terminal in the second terminal group, the first wake-up information and the second wake-up information may belong to wake-up information corresponding to a same paging occasion. For example, the first wake-up information may be used as a part of wake-up information corresponding to the paging occasion MO #0, and the second wake-up information may be used as a part of wake-up information corresponding to the paging occasion MO #1. When the wake-up information on any paging occasion supports indication of a wake-up status of only one terminal group, and the terminal in the first terminal group is not completely the same as the terminal in the second terminal group, the first wake-up information and the second wake-up information may respectively belong to wake-up information corresponding to different paging occasions. For example, the first wake-up information may belong to wake-up information corresponding to the paging occasion MO #0, and the second wake-up information may belong to wake-up information corresponding to the paging occasion MO #1.

In an implementation of S102, when the first wake-up information indicates to wake up the terminal in the first terminal group and/or the second wake-up information indicates to wake up the terminal in the second terminal group, the first terminal may determine to wake up the first terminal. In other words, when receiving at least one piece of wake-up information indicating to perform wake-up in the first wake-up information and the second wake-up information, the first terminal may determine to wake up the first terminal, to avoid a service delay or other transmission performance deterioration caused by omission of the wake-up information.

In an example, if at least one of the following conditions is satisfied, the first terminal may determine to wake up the first terminal: The first wake-up information indicates to wake up the first terminal group, and the second wake-up information indicates not to wake up the second terminal group; the first wake-up information indicates not to wake up the first terminal group, and the second wake-up information indicates to wake up the second terminal group; and the first wake-up information indicates to wake up the first terminal group, and the second wake-up information indicates to wake up the second terminal group.

Correspondingly, if the following condition is satisfied, the first terminal may determine not to wake up the first terminal: The first wake-up information indicates not to wake up the first terminal group, and the second wake-up information indicates not to wake up the second terminal group.

In an implementation of S102, when the first wake-up information indicates not to wake up the terminal in the first terminal group and/or the second wake-up information indicates not to wake up the terminal in the second terminal group, the first terminal may determine not to wake up the first terminal. In other words, only when the first terminal receives the two pieces of wake-up information, namely, the first wake-up information and the second wake-up information, indicating to perform wake-up, the first terminal may determine to wake up the first terminal, so as to avoid an increase in power consumption caused by incorrect wake-up.

In an example, if at least one of the following conditions is satisfied, the first terminal may determine not to wake up the first terminal:
the first wake-up information indicates to wake up the first terminal group, and the second wake-up information indicates not to wake up the second terminal group;
the first wake-up information indicates not to wake up the first terminal group, and the second wake-up information indicates to wake up the second terminal group; and
the first wake-up information indicates not to wake up the first terminal group, and the second wake-up information indicates not to wake up the second terminal group.

Correspondingly, if the following condition is satisfied, the first terminal may determine to wake up the first terminal: The first wake-up information indicates to wake up the first terminal group, and the second wake-up information indicates to wake up the second terminal group.

In a possible embodiment of S102, based on a transmission parameter and/or a transmission requirement of the first terminal, the first terminal may decide to determine wake-up based on one piece of wake-up information indicating to perform wake-up in the first wake-up information and the second wake-up information, or decide to determine wake-up based on two pieces of information indicating to perform wake-up: the first wake-up information and the second wake-up information. The transmission performance may include a parameter like a transmission delay, power consumption, a network capacity, or performance of the first terminal, for example, a performance parameter like a current transmission delay, current power consumption, or a current capacity of the first terminal. The transmission requirement of the first terminal may include a delay requirement, a performance requirement, a power consumption requirement, or a network capacity requirement of the first terminal.

In a possible implementation, if the first terminal has relatively low transmission performance or the first terminal requires relatively high transmission performance, the current transmission delay is relatively high or the first terminal requires a relatively low transmission delay, or the current network capacity is relatively low or a relatively high network capacity is required, the first terminal may determine, when at least one of the first wake-up information and the second wake-up information indicates to perform wake-up, to wake up the first terminal. For example, if the first terminal is a high-performance-first terminal, when an actual delay of a service to be transmitted by the first terminal is greater than a preset delay threshold, the first terminal may wake up the first terminal when at least one of the first wake-up information and the second wake-up information indicates to perform wake-up.

In addition, if the current transmission power consumption is relatively high or the first terminal requires relatively low transmission power consumption, the first terminal may determine to wake up only when both the first wake-up information and the second wake-up information indicate to perform wake-up. For another example, if the first terminal is a low-power-consumption-first terminal, the first terminal wakes up only when both the first wake-up information and the second wake-up information indicate to perform wake-up.

To support the method shown in this application, in embodiments of this application, the first terminal may send fourth information to the network device. The fourth information may include, carry, or indicate a maximum number, supported by the first terminal, of terminal groups to which the first terminal belongs, or the fourth information indicates a number, expected by the first terminal, of terminal groups to which the first terminal belongs. The fourth information may be information reported by the terminal, capability information, or another parameter. This is not specifically limited. The network device may learn, based on the fourth information reported by the first terminal, whether the first terminal supports or expects monitoring for a plurality of pieces of wake-up information, to determine whether to send the first wake-up information and the second wake-up information to the first terminal.

For ease of description below, the maximum number, supported by the first terminal, of terminal groups to which the first terminal belongs is referred to as a first number for short, and the number, expected by the first terminal, of terminal groups to which the first terminal belongs is referred to as a second number.

The first number may be an allowed maximum number of terminal groups to which the first terminal belongs.

The second number may be a number range, for example, may indicate that the first terminal expects to be in at least two terminal groups, to improve transmission performance of the first terminal. Alternatively, the second number may be a maximum number, expected by the first terminal, of terminal groups to which the first terminal belongs. The maximum number, expected by the first terminal, of terminal groups to which the first terminal belongs may be determined based on the maximum number, supported by the first terminal, of terminal groups to which the first terminal belongs.

In a possible embodiment, the first number and/or the second number may be determined based on a terminal capability or a performance requirement of the first terminal. For example, the terminal capability is highest transmission performance supported by the terminal, or current transmission performance of the first terminal, for example, delay performance. For example, the performance requirement is a transmission requirement of a service of the first terminal, for example, a delay requirement. For example, there may be an association relationship between the first number and/or the second number and one or more of a power consumption requirement, a coverage requirement, and a performance requirement of the first terminal. The first terminal may determine, based on the association relationship, the first number and/or the second number corresponding to one or more of the power consumption requirement, the coverage requirement, and the performance requirement that can be determined by the first terminal. For example, the association relationship is represented by using a correspondence table, or may be represented by using a function relationship. This is not specifically limited.

In another possible implementation, the fourth information may include one or more of a power consumption requirement, a coverage requirement, and a performance requirement of the first terminal, so that the network device may determine, based on the one or more of the power consumption requirement, the coverage requirement, and the performance requirement of the first terminal, the maximum number, supported by the first terminal, of terminal groups to which the first terminal belongs, or the number, expected by the first terminal, of terminal groups to which the first terminal belongs. For example, the network device may determine, based on an association relationship between the first number and/or the second number and one or more of the power consumption requirement, the coverage requirement, and the performance requirement of the first terminal, the first number and/or the second number corresponding to one or more of the power consumption requirement, the coverage requirement, and the performance requirement that can be determined by the first terminal.

The fourth information above may be carried in terminal assistance information (UE assistance information, UAI) of the first terminal.

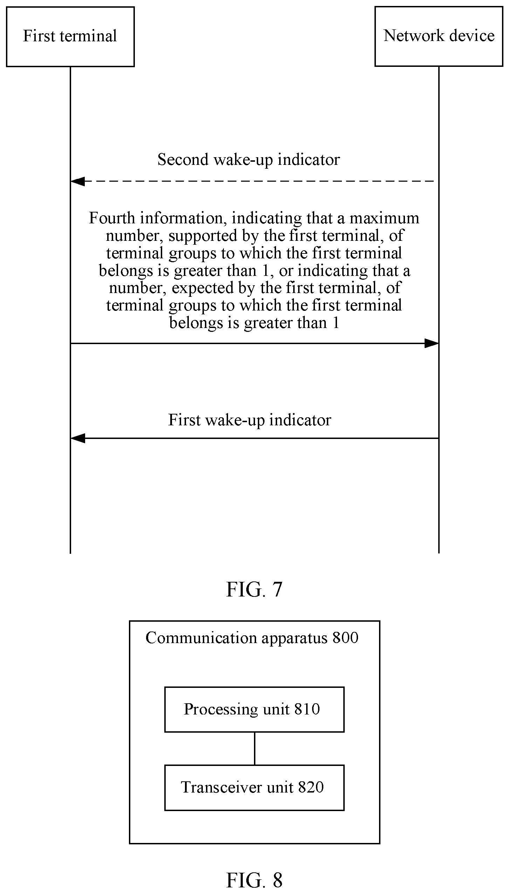

Optionally, the number of terminal groups to which the first terminal belongs may be determined based on the fourth information, so that the number of terminal groups to which the first terminal belongs can satisfy a transmission requirement of the first terminal. For example, the number of terminal groups to which the first terminal belongs does not exceed the first number. For another example, the second number is a number range, and the number of terminal groups to which the first terminal belongs falls within the number range. As shown in FIG. 7, the first terminal may send the fourth information to the network device, to indicate that the maximum number, supported by the first terminal, of terminal groups to which the first terminal belongs is greater than 1, or indicate that the number, expected by the first terminal, of terminal groups to which the first terminal belongs is greater than 1. The first terminal may further receive a first wake-up indicator sent by the network device to the terminal, and the first wake-up indicator may indicate the first terminal to determine, based on wake-up information of a plurality of terminal groups, whether to wake up the first terminal. The wake-up information of the plurality of terminal groups may include the first wake-up information and the second wake-up information. In other words, the first terminal may determine, based on the first wake-up indicator, to perform the procedure shown in FIG. 3. The first wake-up indicator may be determined based on the fourth information.

Optionally, the fourth information may be sent based on a second wake-up indicator. The second wake-up indicator may indicate the terminal to determine, based on wake-up information of one terminal group, whether to wake up the first terminal. As shown in FIG. 7, after receiving the second wake-up indicator, the first terminal may send the fourth information to the network device, and receive the first wake-up indicator from the network device.

In embodiments of this application, the first terminal may further send fifth information, and the fifth information may include, carry, indicate, or represent that the first terminal supports monitoring for a plurality of pieces of wake-up information. Based on the foregoing implementation, a first communication apparatus may report the fifth information, to indicate whether the first terminal supports monitoring for a plurality of pieces of wake-up information, in other words, to indicate whether the first terminal supports repeated grouping, so that the network can determine, based on whether the first terminal supports monitoring for a plurality of pieces of wake-up information, whether to perform repeated grouping, that is, determine whether to perform the method shown in this application.

In an example, the fifth information and the fourth information may be same information, or the fourth information and the fifth information may be reused. For example, when the fourth information indicates that the maximum number, supported by the first terminal, of terminal groups to which the first terminal belongs is greater than 1, or indicates that the number, expected by the first terminal, of terminal groups to which the first terminal belongs is greater than 1, it may indicate that the first terminal supports monitoring for a plurality of pieces of wake-up information.

In embodiments of this application, the first terminal may further receive sixth information, and the sixth information may include, carry, indicate, or be used to determine that the first terminal is to monitor a plurality of pieces of wake-up information. For example, when the first terminal is configured not to monitor a plurality of pieces of wake-up information, the first terminal may be indicated, by using the sixth information, to monitor a plurality of pieces of wake-up information.

For example, the sixth information may indicate that the base station sends or is to send a plurality of pieces of wake-up information including the first wake-up information and the second wake-up information. The sixth information may be carried in an RRC message, a MAC CE, DCI, a SIB, or the like. Based on the foregoing implementation, the first terminal may receive the sixth information, and determine, based on the sixth information, to monitor a plurality of pieces of wake-up information, that is, determine, based on the sixth information, to perform the method shown in this application. Therefore, the network device may explicitly indicate, by using signaling, the first terminal to monitor a plurality of pieces of wake-up information.

In a possible embodiment, the sixth information and an indicator or a configuration (referred to as seventh information below) that indicates the first terminal to monitor one piece of wake-up information may be reused in a same field. In other words, the field may indicate the first terminal to monitor one or more pieces of wake-up information. When the first terminal is configured to monitor a plurality of pieces of wake-up information, the first terminal may be indicated, by using the seventh information, to monitor one piece of wake-up information. Therefore, the first terminal may be configured to monitor only one piece of wake-up information. For example, the field occupies one bit. When a value of the bit is 0, the field is used to configure the first terminal to monitor only one piece of wake-up information. When a value of the bit is 1, the field is used to configure the first terminal to monitor a plurality of pieces of wake-up information. For another example, the field may carry a number of pieces of wake-up information to be monitored by the first terminal. If a value of the field is configured to be 1, the field is used to configure the first terminal to monitor only one piece of wake-up information. If a value of the field is configured to be greater than 1, the field is used to configure the first terminal to monitor a plurality of pieces of wake-up information.

Optionally, the base station may alternatively indicate, in an implicit manner, the first terminal to monitor a plurality of pieces of wake-up information. For example, when the base station configures the number of terminal groups to which the first terminal belongs to be greater than 1, the first terminal may be indicated to monitor a plurality of pieces of wake-up information. For another example, when the base station configures identifiers of a plurality of terminal groups for the first terminal, the first terminal may be indicated to monitor a plurality of pieces of wake-up information.

In embodiments of this application, the first terminal may determine, based on at least one of the following, to perform the method provided in this application, that is, determine, based on at least one of the following, to perform the method shown in FIG. 3:
(1) A number, supported by the first terminal, of terminal groups to which the first terminal belongs is greater than 1. If the number, supported by the first terminal, of terminal groups to which the first terminal belongs is greater than 1, the first terminal may perform the method shown in this application.
(2) A transmission parameter and/or a transmission requirement of a service of the first terminal satisfies a condition for using repeated grouping. As described in this application, the transmission performance may include a parameter like a transmission delay, transmission power consumption, a network capacity, or transmission performance of the first terminal, for example, a performance parameter like a current transmission delay, current power consumption, or a current capacity of the first terminal. The transmission requirement of the first terminal may include a delay requirement, a performance requirement, a power consumption requirement, or a capacity requirement of the first terminal.

For the transmission delay or the delay requirement, because repeated grouping can reduce a risk of a delay increase caused by incorrect wake-up of the terminal, determining, based on repeated grouping, whether to wake up the first terminal can reduce the delay and/or satisfy a relatively high delay requirement. For the transmission power consumption or the power consumption requirement, because repeated grouping can reduce a false alarm rate, the first terminal does not need to be ineffectively woken up frequently, thereby facilitating energy saving. For the network capacity or the network capacity requirement, channel quality is poor when a channel condition is poor, and it is difficult for the terminal to connect to the base station. As a result, a number of terminals that can be served by the base station is relatively small. Therefore, repeated grouping may be used to increase a probability that the terminal enters an RRC connected state through a random access procedure, thereby helping improve the network capacity. For the transmission performance or the performance requirement, when repeated grouping is used, the first terminal may combine two or more pieces of information. For example, the first wake-up information and the second wake-up information are repeatedly sent. A channel condition is relatively poor when the first wake-up information is transmitted. Therefore, a signal of the first wake-up information received by the first terminal is relatively poor. If the channel is relatively good when the second wake-up information is transmitted, the first terminal may perform superposition on the two signals. Because wake-up information in different terminal groups is the same during repeated transmission, whether to perform wake-up may be determined based on two pieces of wake-up information, thereby reducing a probability of missed detection.

The delay requirement is used as an example. That the performance parameter satisfies the condition for using repeated grouping includes, for example, that a delay required by a service to be transmitted by the first terminal is less than or equal to (or not greater than) a delay threshold. For example, when determining that the delay required by the service is less than the delay threshold, the first terminal may determine, based on the method shown in this application, whether to wake up the first terminal. In other words, when a service transmission delay requirement is relatively high (or the delay required by the service is relatively low), the first terminal may determine, based on the first wake-up information and the second wake-up information, whether to wake up the first terminal.

The delay threshold may be configured by the network device, or may be predefined. If the delay threshold is configured by the network device, configuration information of the delay threshold may be carried in a message sent by the network device to the first terminal. For example, the network device is a base station. The message is, for example, an RRC message, a MAC CE, DCI, or a SIB. This is not specifically limited.

(3) Channel information, for example, channel state information (channel state information, CSI), of the first terminal satisfies a condition for using repeated grouping. That the channel information of the first terminal satisfies the condition for using repeated grouping includes, for example, that the CSI of the first terminal is less than or equal to (or not greater than) a CSI threshold. For example, when the CSI is less than or equal to (or not greater than) the CSI threshold, the first terminal may determine, based on the method shown in this application, whether to wake up the first terminal. In other words, when a channel condition is relatively poor, the first terminal may determine, based on the first wake-up information and the second wake-up information, whether to wake up the first terminal.

The CSI threshold may be configured by the network device, or may be predefined. If the CSI threshold is configured by the network device, configuration information of the CSI threshold may be carried in a message sent by the network device to the first terminal. For example, the network device is a base station. The message is, for example, an RRC message, a MAC CE, DCI, or a SIB. This is not specifically limited.

(4) The base station indicates the first terminal to monitor a plurality of pieces of wake-up information. The base station may explicitly indicate the first terminal to monitor a plurality of pieces of wake-up information. For example, the explicit manner is that the base station indicates, by using the foregoing sixth information, the first terminal to monitor a plurality of pieces of wake-up information. In addition, the base station may alternatively implicitly indicate the first terminal to monitor a plurality of pieces of wake-up information. For example, when the base station configures the number of terminal groups to which the first terminal belongs to be greater than 1, or when the base station configures identifiers of a plurality of terminal groups for the first terminal, the first terminal may be indicated, in the implicit manner, to monitor a plurality of pieces of wake-up information.

When at least one of the foregoing condition (1) to condition (4) is satisfied, the first terminal and the base station may determine, by using the method in embodiments of this application, whether to wake up the first terminal, to appropriately determine whether to perform the method shown in this application.

In embodiments of this application, the first terminal may determine, based on at least one of the following, not to perform the method provided in this application. Not performing the method provided in this application may mean that the first terminal still determines, based on only one piece of wake-up information, whether to wake up the first terminal. To be specific, the first terminal determines, based on at least one of the following, to perform the method shown in FIG. 3:
(1) The first terminal receives a wake-up indicator from the network device, and the wake-up indicator indicates the first terminal to exit a plurality of repeated groups, for example, indicates that the number of terminal groups to which the first terminal belongs is 1. For another example, the wake-up indicator may indicate the first terminal not to use repeated grouping, that is, indicate that the first terminal does not belong to a plurality of terminal groups. Alternatively, the wake-up indicator may indicate one or more terminals to exit repeated groups, or indicate one or more terminals not to use repeated grouping, and the one or more terminals include the first terminal.
(2) A performance parameter of a service of the first terminal does not satisfy a condition for using repeated grouping. In other words, the performance parameter of the service of the first terminal satisfies a condition for not using repeated grouping. For example, the first terminal may not perform the method provided in this application when a delay of the service is greater than or equal to (or not less than) a delay threshold. In other words, the first terminal may not perform the method provided in this application when the delay of the service is relatively low. The delay threshold may be determined in the manner in this application. Details are not described again.
(3) Channel information of the first terminal does not satisfy a condition for using repeated grouping. In other words, the channel information of the first terminal satisfies a condition for not using repeated grouping. For example, the first terminal may not perform the method provided in this application when CSI is greater than or equal to (or not less than) a CSI threshold. In other words, the first terminal may not perform the method provided in this application when a channel is in a relatively good state. The CSI threshold may be determined in the manner in this application. Details are not described again.
(4) A number, supported or expected by the first terminal, of terminal groups to which the first terminal belongs is not greater than 1. For example, if the first terminal indicates, in UAI, that the supported or expected number of terminal groups to which the first terminal belongs is 1, the first terminal may not perform the method provided in this application.

When at least one of the foregoing condition (1) to condition (4) is satisfied, the first terminal and the base station may not determine, by using the method in embodiments of this application, whether to wake up the first terminal. In this case, the first terminal may monitor one piece of wake-up information to determine whether to perform wake-up.

The foregoing describes the communication method provided in this application, that is, related embodiments. Based on the method shown in this application, the terminal device may determine a wake-up status of the first terminal based on wake-up information (including the first wake-up information and the second wake-up information) corresponding to at least two terminal groups, so that the wake-up status can be determined more accurately, and a false alarm or missed detection can be avoided.

It may be understood that, to implement functions in the foregoing embodiments, the communication apparatus provided in this application may include a corresponding hardware structure and/or software module for performing functions of the first communication apparatus and/or the second communication apparatus. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

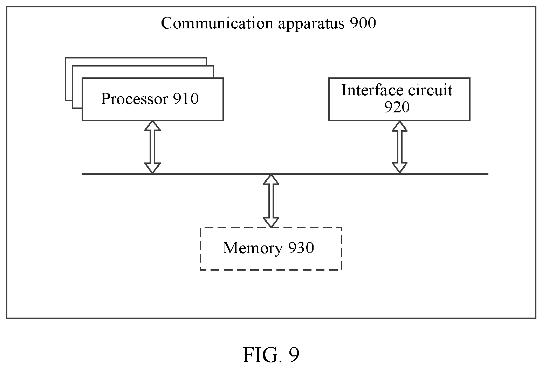

FIG. 8 and FIG. 9 are diagrams of structures of possible communication apparatuses according to an embodiment of this application. These communication apparatuses may be configured to implement functions of the first communication apparatus and/or the second communication apparatus in the foregoing method embodiments, and therefore can also achieve beneficial effects of the foregoing method embodiments. The first communication apparatus and the second communication apparatus each may serve as a first terminal or a network device. In embodiments of this application, the communication apparatus may be the terminal or the network device shown in FIG. 1, or may be a module (for example, a chip) used in the terminal or the network device.

As shown in FIG. 8, a communication apparatus 800 includes a processing unit 810 and a transceiver unit (or an interface unit) 820. The communication apparatus 800 is configured to implement a function of the first terminal or the network device in the method embodiment shown in FIG. 3.

When the communication apparatus 800 is configured to implement the function of the first terminal in the method embodiment shown in FIG. 3, the transceiver unit 820 may be configured to monitor first wake-up information and second wake-up information. The processing unit 810 may be configured to determine, based on the first wake-up information and the second wake-up information, whether to wake up the first terminal. In addition, the transceiver unit 820 may be further configured to receive one or more of first information, second information, third information, or sixth information. The transceiver unit 820 may be further configured to send fourth information and/or fifth information.

When the communication apparatus 800 is configured to implement the function of the network device in the method embodiment shown in FIG. 3, the transceiver unit 820 may be configured to send first wake-up information and second wake-up information. In addition, the transceiver unit 820 may be further configured to send one or more of first information, second information, third information, or sixth information. The transceiver unit 820 may be further configured to receive fourth information and/or fifth information.

For more detailed descriptions of actions of the processing unit 810 and the transceiver unit 820, refer to related descriptions in the method shown in FIG. 3 and various embodiments or implementations.

As shown in FIG. 9, a communication apparatus 900 includes one or more processors 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to: store instructions executed by the processor 910, or store input data required for running instructions by the processor 910, or store data generated after the processor 910 runs instructions.

When the communication apparatus 900 is configured to implement the method shown in FIG. 3, the processor 910 is configured to implement a function of the processing unit 810, and the interface circuit 920 is configured to implement a function of the transceiver unit 820.

When the communication apparatus is a module or a chip used in a first terminal, the module or the chip implements a function of the first terminal in the foregoing method embodiments. The module or the chip receives information through another module (for example, a radio frequency module or an antenna), and the information may be transmitted to the module or the chip after being received by the another module through an air interface. Alternatively, the module or the chip sends information to another module (for example, a radio frequency module or an antenna), so that the another module sends the information through an air interface.

When the communication apparatus is a module or a chip used in a network device (for example, a base station), the communication apparatus implements a function of the network device in the foregoing method embodiments. The module or the chip may be configured to receive information from another module (for example, a radio frequency module or an antenna), and the information is received by the another module through an air interface. Alternatively, the module or the chip sends information to another module (for example, a radio frequency module or an antenna), so that the another module sends the information through an air interface. The module or the chip herein may be a baseband chip, may be a CU, a DU, or another module, or may be an apparatus in an O-RAN architecture, for example, an apparatus like an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and can write information into the storage medium. The storage medium may alternatively be a part of the processor. The processor and the storage medium may be located in an ASIC. In addition, the ASIC may be located in a base station or an O-RAN. The processor and the storage medium may exist in the base station or the O-RAN as discrete components.

An embodiment of this application further provides a computer-readable storage medium. The computer-readable storage medium stores instructions, and the instructions may also be referred to as a computer program, computer program code, or the like. The instructions are run on a computer, so that the computer performs the method in FIG. 3 in the foregoing method embodiments and methods in embodiments of this application.

An embodiment of this application further provides a computer program product, including a computer program or instructions. When the computer program or the instructions are run on a computer, the methods in FIG. 3 and embodiments of this application are implemented.

An embodiment of this application further provides a chip or a chip system, including a circuit (for example, an analog circuit and/or a logic circuit, which is alternatively understood as that the chip system includes one or more processors, and the one or more processors may include a circuit or the like), which is alternatively understood as that the chip includes a processor. The circuit or the processor is coupled to a memory, and is configured to execute a computer program or instructions stored in the memory, so that the method shown in FIG. 3 and embodiments of this application is implemented. The chip or the chip system may further include an input/output interface. For example, the chip implements a function of a network device. The chip may receive information from another module (for example, a radio frequency or an antenna) of the network device through the input/output interface, and the information may be sent by a terminal to the network device. Alternatively, the chip may send information to another module (for example, a radio frequency or an antenna) in the network device through the input/output interface, and the information is sent by the network device to a terminal.

An embodiment of this application further provides a communication system, including a first communication apparatus and a second communication apparatus. The first communication apparatus and the second communication apparatus may be respectively configured to implement functions of the first terminal and the network device in this application.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; or including A, B, and C, where A, B, and C may be singular or plural.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. A communication method, comprising:
monitoring first wake-up information and second wake-up information, wherein the first wake-up information indicates whether to wake up a terminal in a first terminal group, the first terminal group comprises a first terminal, the second wake-up information indicates whether to wake up a terminal in a second terminal group, and the second terminal group comprises the first terminal; and
determining, based on the first wake-up information and the second wake-up information, whether to wake up the first terminal.

2. The method according to claim 1, wherein the determining, based on the first wake-up information and the second wake-up information, whether to wake up the first terminal comprises:
if at least one of the following conditions is satisfied, determining to wake up the first terminal:
the first wake-up information indicates to wake up the first terminal group, and the second wake-up information indicates not to wake up the second terminal group;
the first wake-up information indicates not to wake up the first terminal group, and the second wake-up information indicates to wake up the second terminal group; and
the first wake-up information indicates to wake up the first terminal group, and the second wake-up information indicates to wake up the second terminal group; or
if at least one of the following conditions is satisfied, determining not to wake up the first terminal:
the first wake-up information indicates to wake up the first terminal group, and the second wake-up information indicates not to wake up the second terminal group;
the first wake-up information indicates not to wake up the first terminal group, and the second wake-up information indicates to wake up the second terminal group; and
the first wake-up information indicates not to wake up the first terminal group, and the second wake-up information indicates not to wake up the second terminal group.

3. The method according to claim 1 or 2, wherein the first wake-up information and the second wake-up information are carried in a same low-power wake-up signal, the low-power wake-up signal carries N bits, the first wake-up information and the second wake-up information each are one of the N bits, any one of the N bits corresponds to one of the N terminal groups, the N terminal groups comprise the first terminal group and the second terminal group, and N is a positive integer greater than 1; or
the first wake-up information is carried in a first low-power wake-up signal, the second wake-up information is carried in a second low-power wake-up signal, the first low-power wake-up signal carries N bits, the first wake-up information is one of the N bits, any one of the N bits corresponds to one of the N terminal groups, the N terminal groups comprise the first terminal group, the second low-power wake-up signal carries M bits, the second wake-up information is one of the M bits, any one of the M bits corresponds to one of the M terminal groups, and the M terminal groups comprise the second terminal group; or
the first wake-up information is carried in a first low-power wake-up signal, the second wake-up information is carried in a second low-power wake-up signal, the first wake-up information comprises an identifier of the first terminal group, and the second wake-up information comprises an identifier of the second terminal group.

4. The method according to any one of claims 1 to 3, wherein the method further comprises:
receiving first information, wherein the first information indicates the identifier of the first terminal group and/or the identifier of the second terminal group.

5. The method according to any one of claims 1 to 3, wherein the method further comprises:
determining the identifier of the first terminal group and/or the identifier of the second terminal group based on a number of terminal groups to which the first terminal belongs, wherein the terminal groups to which the first terminal belongs comprise the first terminal group and the second terminal group.

6. The method according to any one of claims 1 to 3, wherein the method further comprises:
receiving second information, wherein the second information indicates the identifier of the first terminal group; and
determining the identifier of the second terminal group based on a number of terminal groups to which the first terminal belongs and/or the identifier of the first terminal group, wherein the terminal groups to which the first terminal belongs comprise the first terminal group and the second terminal group.

7. The method according to claim 5 or 6, wherein the method further comprises:
receiving third information, wherein the third information indicates the number of terminal groups to which the first terminal belongs.

8. The method according to any one of claims 5 to 7, wherein the third information is carried in a low-power wake-up signal or a low-power synchronization signal.

9. The method according to any one of claims 1 to 8, wherein the method further comprises:
sending fourth information, wherein the fourth information indicates a maximum number, supported by the first terminal, of terminal groups to which the first terminal belongs, or the fourth information indicates a number, expected by the first terminal, of terminal groups to which the first terminal belongs.

10. The method according to any one of claims 1 to 9, wherein the method further comprises:
sending fifth information, wherein the fifth information indicates that the first terminal supports monitoring for a plurality of pieces of wake-up information.

11. The method according to any one of claims 1 to 10, wherein the method further comprises:
receiving sixth information, wherein the sixth information is used to determine that the first terminal is to monitor a plurality of pieces of wake-up information.

12. A communication method, comprising:
sending first wake-up information and second wake-up information, wherein the first wake-up information indicates whether to wake up a terminal in a first terminal group, the first terminal group comprises a first terminal, the second wake-up information indicates whether to wake up a terminal in a second terminal group, and the second terminal group comprises the first terminal.

13. The method according to claim 12, wherein the first wake-up information and the second wake-up information are carried in a same low-power wake-up signal, the low-power wake-up signal carries N bits, the first wake-up information and the second wake-up information each are one of the N bits, any one of the N bits corresponds to one of the N terminal groups, the N terminal groups comprise the first terminal group and the second terminal group, and N is a positive integer greater than 1; or
the first wake-up information is carried in a first low-power wake-up signal, the second wake-up information is carried in a second low-power wake-up signal, the first low-power wake-up signal carries N bits, the first wake-up information is one of the N bits, any one of the N bits corresponds to one of the N terminal groups, the N terminal groups comprise the first terminal group, the second low-power wake-up signal carries M bits, the second wake-up information is one of the M bits, any one of the M bits corresponds to one of the M terminal groups, and the M terminal groups comprise the second terminal group; or
the first wake-up information is carried in a first low-power wake-up signal, the second wake-up information is carried in a second low-power wake-up signal, the first wake-up information comprises an identifier of the first terminal group, and the second wake-up information comprises an identifier of the second terminal group.

14. The method according to claim 12 or 13, wherein the method further comprises:
sending first information, wherein the first information indicates the identifier of the first terminal group and/or the identifier of the second terminal group.

15. The method according to claim 14, wherein the method further comprises:
receiving the identifier of the first terminal group; and
configuring the identifier of the second terminal group based on the identifier of the first terminal group.

16. The method according to any one of claims 12 to 15, wherein the method further comprises:
sending third information, wherein the third information indicates a number of terminal groups to which the first terminal belongs, the number of terminal groups to which the first terminal belongs is used to determine the identifier of the second terminal group, and the terminal groups to which the first terminal belongs comprise the first terminal group and the second terminal group.

17. The method according to any one of claims 12 to 16, wherein the method further comprises:
receiving fourth information, wherein the fourth information indicates a maximum number, supported by the first terminal, of terminal groups to which the first terminal belongs, or the fourth information indicates a number, expected by the first terminal, of terminal groups to which the first terminal belongs.

18. The method according to any one of claims 12 to 17, wherein the method further comprises:
receiving fifth information, wherein the fifth information indicates that the first terminal supports monitoring for a plurality of pieces of wake-up information.

19. The method according to any one of claims 12 to 18, wherein the method further comprises:
sending sixth information, wherein the sixth information is used to determine that the first terminal is to monitor a plurality of pieces of wake-up information.

20. A communication apparatus, comprising a unit or module configured to perform the method according to any one of claims 1 to 11, or comprising a unit or module configured to perform the method according to any one of claims 12 to 19.

21. A communication apparatus, comprising a processor, wherein the processor is configured to perform the method according to any one of claims 1 to 11, or is configured to perform the method according to any one of claims 12 to 19.

22. A computer-readable storage medium, wherein the storage medium stores a computer program or instructions, and when the computer program or the instructions are executed by a communication apparatus, the method according to any one of claims 1 to 11 is implemented, or the method according to any one of claims 12 to 19 is implemented.

23. A computer program product, wherein when the computer program product is executed by a computer, the computer is caused to perform the method according to any one of claims 1 to 11, or perform the method according to any one of claims 12 to 19.
